# EUROPEAN PATENT SPECIFICATION

(11) **EP 3 513 266 B1**
(45) Date of publication and mention of the grant of the patent: **11.11.2020**
(21) Application number: 16794719.1
(22) Date of filing: 13.09.2016
(51) Int. Cl.: G05D 7/01

(54) **FLOWRATE STABILISING MONOBLOCK CARTRIDGE FOR HYDRAULIC VALVES**
DURCHFLUSSSTABILISIERENDE MONOBLOCK-KARTUSCHE FÜR HYDRAULIKVENTILE
CARTOUCHE MONOBLOQUE DE STABILISATION DU FLUX POUR VANNES HYDRAULIQUES

(43) Date of publication of application: 24.07.2019
(73) Proprietor: Caleffi S.p.A., 28010 Fontaneto d'Agogna (NO) (IT)
(72) Inventor: CALEFFI, Marco, 28010 Fontaneto d'Agogna (NO) (IT)
(74) Representative: Siniscalco, Fabio
(86) International application number: PCT/IB2016/001283
(87) International publication number: WO 2018/051150

(56) References cited:
- WO-A1-2014/033678
- WO-A1-2015/112109
- WO-A1-2016/128393
- AU-A1- 2012 258 441
- GB-A- 2 535 523

## Description

### BACKGROUND OF THE INVENTION

The object of the present invention is a flowrate stabilising monoblock cartridge intended to be inserted into the bodies of hydraulic valves.

### PRIOR ART

In heating plants, using thermostatic valves for adjusting the fluid to the radiators is known. The thermostatic valve is connected to a thermostatic or electrothermal control and maintains constant, at the set value, the ambient temperature of the place in which it is installed. The thermostatic control moves a shutter of the valve according to the temperature so as to reduce or increase the fluid flowrate to the radiator. In this manner undesired temperature increases in the place are avoided and considerable energy savings are obtained.

Pressure reducing devices that reduce and stabilise the pressure entering the radiators can also be combined with the thermostatic valves. In fact, excessive temperature fluctuations can compromise the operation of the thermostatic valves and in general of the system, in addition to creating noise in the system.

### OBJECTS OF THE INVENTION

One object of the invention is to propose a monoblock cartridge for hydraulic valves that is able to adjust the flowrate independently of the pressure and be used with great pressure differences upstream and downstream of the cartridge.

Another object of the invention is that this monoblock cartridge is compact and easily installable/replaceable in a body of a valve, also in replacement of a valve cartridge of another type.

A further object of the invention is that this monoblock cartridge is very silent, regardless of the pressure variations in the system in which the valves with this cartridge are installed.

### SHORT DESCRIPTION OF THE INVENTION

This object is achieved by a flowrate stabilising monoblock cartridge according to claim 1.

WO2015/112109A1 relates to the preamble of claim 1.

### SHORT DESCRIPTION OF THE DRAWINGS

In order to understand the invention better, a description is given below of an embodiment thereof by way of non-limiting example illustrated in the attached drawings, in which:
fig. 1 is an exploded perspective view of a flowrate stabilising monoblock cartridge according to the invention;
fig. 2 is a view in an axial section of the cartridge in fig. 1;
fig. 3 shows a perspective view of a portion of cartridge;
fig. 4 shows some coupled components of the portion of cartridge of fig. 3;
figs 5, 6, 7 show respectively in an elevation view three pre-adjusting positions of the maximum flowrate of the cartridge of fig. 1;
fig. 8 shows in an axial section the cartridge of fig. 1 installed in a possible valve body;
fig. 9 shows in an axial section the operation of the cartridge in fig.1.

### DETAILED DESCRIPTION OF THE INVENTION

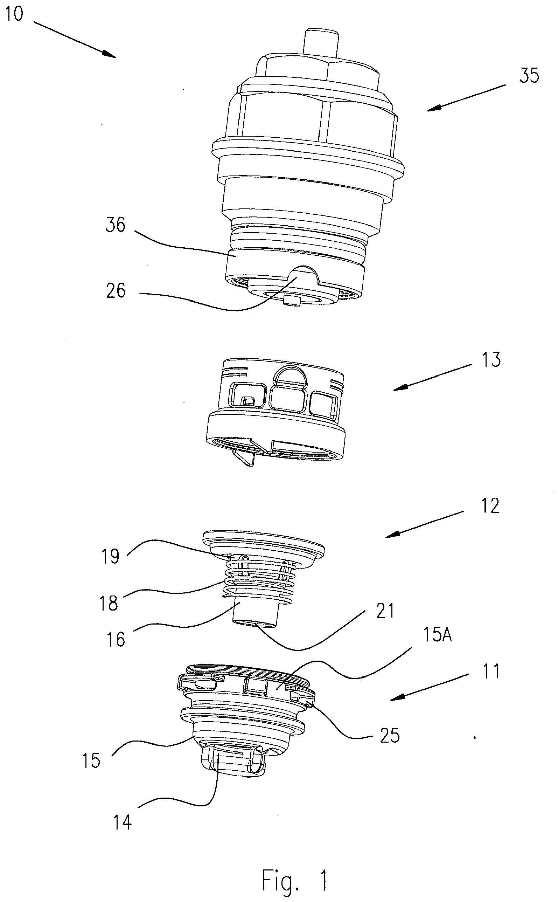

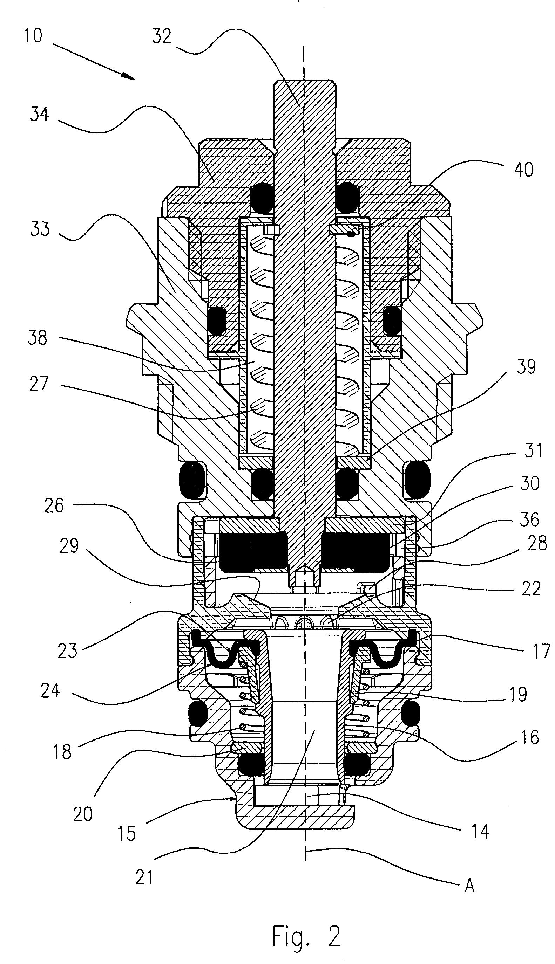

With reference to figs 1, 2, the illustrated cartridge, indicated generally by 10, provides a body with a fluid inlet section 11, an intermediate section 12, and a fluid outlet section 13.

The inlet section 11 provides first openings 14 for the entry of the fluid into the cartridge 10, which are arranged along an annular wall 15 of the inlet section 11 to enable fluid to enter in a radial direction that is orthogonal to a longitudinal axis A of the cartridge 10. The inlet section 11 is moreover hollow, such as to enable the fluid to enter in a radial direction, to flow therein along the axial direction.

The inlet section 11 is so shaped as to be able to be housed in valve bodies containing already existing cartridges.

The intermediate section 12 is shaped to be housed inside the inlet section 11 and is hollow to enable the fluid to flow therein along the longitudinal axis A. In fact, in the intermediate section 12 there is a first shutter 16 that reduces the flow of fluid coming from the first openings 14, the first shutter 16 is mounted on a diaphragm 17 and a calibrated spring 18 acts to open the first shutter 16. The calibrated spring 18 is located outside the shutter 16 and in particular presses at an end on a fixing bush 19 of the diaphragm 17 and at the other end on a fixing ring 20 of a seal gasket.

The shutter 16 thus has an inner passage 21 that links the first openings 14 of the inlet section 11 to the passage openings 22 of the intermediate section 12 and to a first face 23 of the diaphragm 17, the fluid pressure acting on the first face 23 of the diaphragm 17 being reduced with respect to the pressure entering the cartridge 10 by the reducing action of the first shutter 16. The pressure difference between the first 23 and the second 24 face of the diaphragm 17 determines the movement of the shutter 16.

Second openings 25 are obtained on another annular wall 15A of the inlet section 11, to convey the fluid pressure signal downstream of the cartridge 10 to the second face 24 of the diaphragm 17.

The outlet section 13 provides a second shutter 26 controlled by a heat-sensitive actuating device that adjusts the fluid flowrate within a preset range.

For example, a thermostatic head of the actuating device controls opening and closing of the second shutter 26, such that it permits or does not permit the fluid to flow downstream, on the basis of a given temperature value read by a sensor to which it can be connected.

In the outlet section 13 third pre-adjustable openings 28 are provided for adjusting the fluid flowrate downstream.

The second shutter 26, which is arranged coaxially to a sealing seat 29, comprises a stop ring 30 on a side facing the seat 29, and a coupling disc 31 on an opposite side; the ring 30 and the disc 31 have coaxial holes through which a control rod 32 protrudes that is stiffly connected to the second shutter 26. The control rod 32 is sealingly mounted inside two bushes 33 and 34 of a fourth adjusting section 35, which bushes 33 and 34 are reciprocally coupled by threading so as to move along the axis A and to rotate in relation thereto.

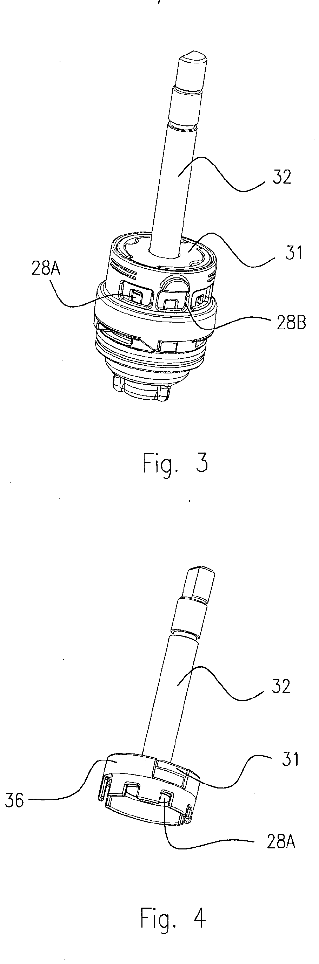

With reference to figs 3, 4, the disc 31 is rotatingly coupled with an inner ring nut 36 provided with a series of notches 28A of progressively greater dimensions in an annular direction. The outer wall of the outlet section 13 is provided with a series of windows 28B arranged annularly in succession, of the same dimensions, arranged at the notches 28A.

The ring nut 36 can be rotated between a plurality of angular positions such as to be able to take the notches 28A to the windows 28B and thus define a respective outlet flow passage area of a predefined value.

The control rod 32, at the end opposite the first shutter 16, extends beyond the bush 34 to be driven axially by the heat-sensitive actuator, which is not illustrated, which is removably connectable to the valve body and to be driven manually in an annular direction.

A plurality of reference marks, for example numbers, notched or marked in another manner on the outer surface of the bush 34 and one or more reference elements on the control rod 32 enable the angular positioning of the pre-adjusting ring nut 36 and consequently the maximum fluid flowrate that is suppliable to the single circuit connected to the valve body to be set precisely.

A coil spring 27 for forcibly opening the second shutter 26 is arranged coaxially to the control rod 32 inside a housing cavity 38 defined between the bushes 33,34; in particular, the spring 27 is interposed between an annular shoulder 39 in the bush 33 and a Seeger ring 40 applied to the control rod 32.

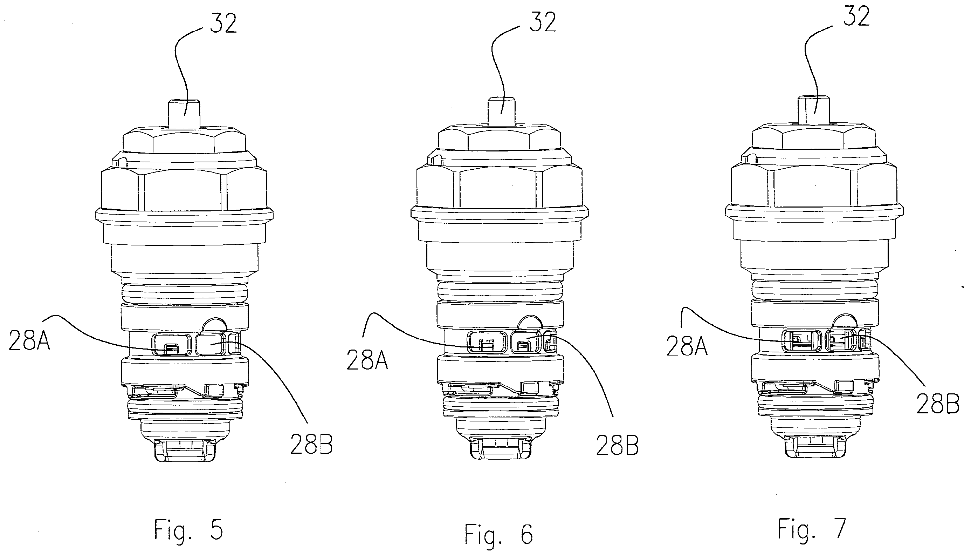

Figures 5-7 show three different possible configurations of the cartridge 10, relating to third openings 28 increasing progressively from figure 5 to figure 7, corresponding to three different outlet flow values.

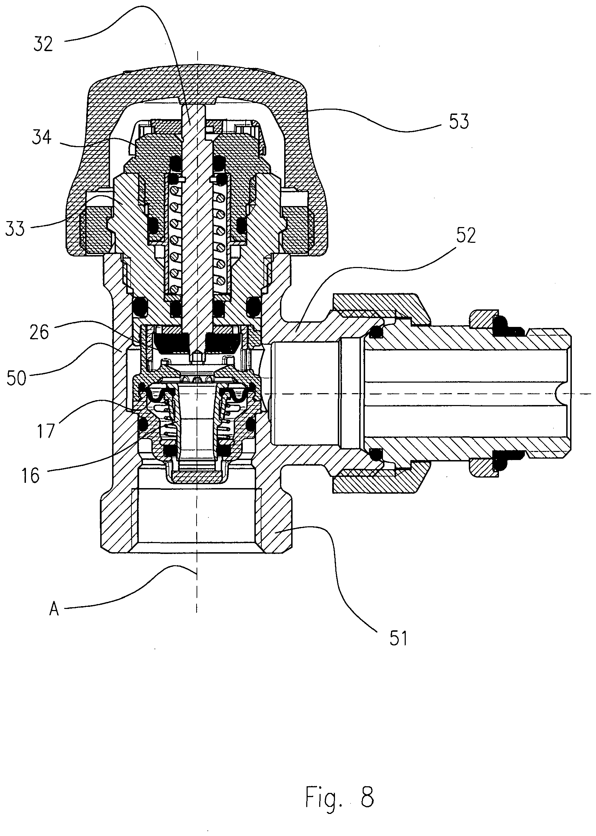

In figure 8 a cartridge 10 is shown that is located inside a containing valve body 50 of the already existing type of a hydraulic valve. In particular, in the figures, the cartridge 10 is in a vertical position but can also be used in different arrangements from what is shown. The cartridge 10 is inserted between a fluid inlet 51 upstream, or the source, and a fluid outlet 52 downstream, typically the application.

The contained cartridge 10 can be protected above by a lid 53.

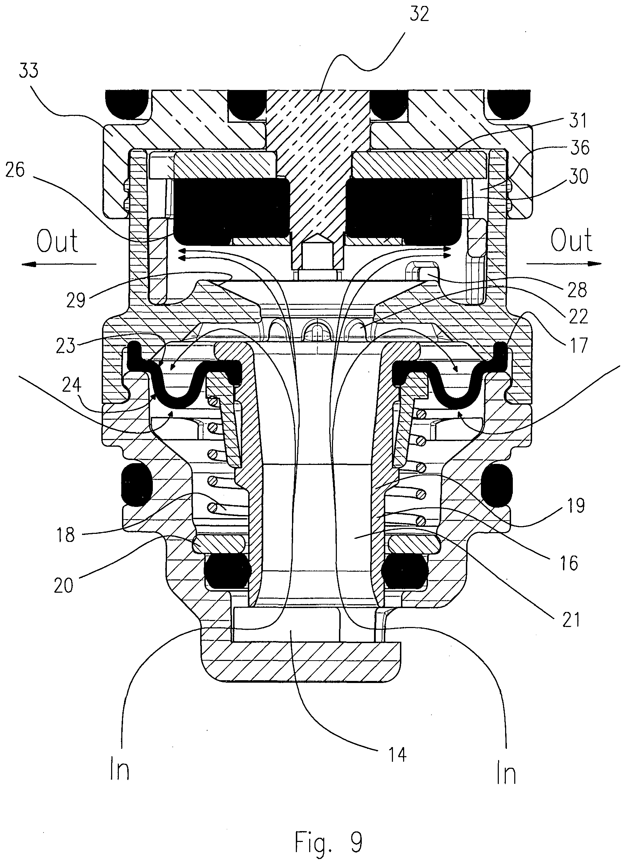

In figure 9 the path of the fluid through the sections 11, 12, 13 and the action of the fluid on the diaphragm 17 are shown by arrows.

In particular, the fluid enters the cartridge 10 from below, through the first openings 14 of the inlet section 11. The flow of the fluid through the first openings 11 with reducing by the shutter 16, enables the pressure of the fluid to be reduced with respect to the value upstream of the cartridge 10, obtaining an intermediate pressure value. In this manner, inside the cartridge 10 the diaphragm 17 and the shutter 26 are subjected to lower pressures with advantages in terms of better structural resistance and a significant reduction in noise and vibrations. In fact, the fluid subsequently passes inside the intermediate section 12, more precisely inside the first shutter 16 through the inner passage 21 until the outlet section 13 is reached. At this point, through the second openings 25, the fluid can reach the zone downstream of the cartridge 10 to press on the second face 24 of the diaphragm 17.

The pressure upstream is equal to that of the fluid source, less load losses along the path; passing through the first openings 14, the fluid, as said above, loses pressure and consequently stabilises at a lower pressure inside the intermediate section 12, acting with lighter loads on the diaphragm 17. The pressure is then reduced further and adjusted by the flow of fluid through the third openings 28.

The disclosed and illustrated cartridge enables a flowrate to be adjusted independently of the pressure and use with great pressure differences upstream and downstream of the cartridge.

This cartridge is compact and easily installable in a body of a valve, also in replacement of a valve cartridge of another type.

Lastly, such a cartridge is very silent, regardless of the pressure variations of the plant in which the valves with this cartridge are installed.

Obviously, variations on and/or additions to what has been disclosed and illustrated can be provided.

For example, the geometry and in general the configuration of the openings and of the various elements that make up the cartridge can be different from what has been disclosed and illustrated.

## Claims

1. Flowrate stabilising monoblock cartridge (10) for hydraulic valves comprising a body with a fluid inlet section (11), an intermediate section (12), and a fluid outlet section (13), wherein:
- in the inlet section (11) first openings (14) are obtained for the entry of the fluid into the cartridge (10),
- in the intermediate section (12) a first shutter (16) is provided that reduces the flow of fluid coming from the first openings (14), is mounted on a diaphragm (17) and is forcibly opened by a calibrated spring (18),
- in the outlet section (13) a second shutter (26) is provided and that is adapted to be controlled by an actuating device that adjusts the fluid flowrate at passage openings (22) within a preset range,
- the first shutter (16) has an inner passage (21) that links the first openings (14) to the passage openings (22) and to a first face (23) of the diaphragm (17), the fluid pressure acting on the first face (23) of the diaphragm (17) being reduced with respect to the pressure entering the cartridge (10) by the reduction action of the first shutter (16),
- the body of the cartridge has second openings (25) to convey the fluid pressure signal downstream of the cartridge (10) to the second face (24) of the diaphragm (17),
- the pressure difference between the first (23) and the second face (24) of the diaphragm (17) determining the movement of the first shutter (16);
- third pre-adjustable openings (28) are provided in the outlet section (13) for adjusting the fluid flowrate at the outlet of the cartridge (10),
**characterized in that** the first openings (14) are arranged along an annular wall (15) of the inlet section (11), the second openings (25) are obtained along another annular wall (15A) of the inlet section (11), and the third pre-adjustable openings (28) comprise an inner ring nut (36) provided with a series of notches (28A) of progressively greater dimensions in an annular direction and an outer wall of the outlet section (13) is provided with a series of windows (28B) arranged annularly in succession, of the same dimensions, arranged at the notches (28A), the rotational movement of the ring nut (36) with respect to the windows (28B) determining the variation in the outlet flow passage area.

2. Cartridge according to claim 1, wherein the second shutter (26) is driven by a control rod (32) coupled with the ring nut (36) to rotate the ring nut (36) and adjust the fluid flowrate.

3. Cartridge according to claim 2, comprising an adjusting section (35) that receives the second shutter (26) and the control rod (32).

4. Hydraulic valve comprising a hollow body (50) with an inlet (51) and an outlet (52) that receives a cartridge (10) according to any preceding claim.

## Patentansprüche

1. Durchflussstabilisierende Monoblockpatrone (10) für Hydraulikventile, die einen Körper mit einem Fluideinlassabschnitt (11), einem Zwischenabschnitt (12) und einem Fluidauslassabschnitt (13) umfasst, wobei:
- in dem Einlassabschnitt (11) erste Öffnungen (14) für den Eintritt des Fluids in die Patrone (10) erhalten werden,
- in dem Zwischenabschnitt (12) ein erster Verschluss (16) bereitgestellt ist, der den aus den ersten Öffnungen (14) kommenden Fluidstrom reduziert, auf einer Membran (17) angebracht ist und durch eine kalibrierte Feder (18) zwangsweise geöffnet wird,
- in dem Auslassabschnitt (13) ein zweiter Verschluss (26) bereitgestellt ist, der durch eine Betätigungsvorrichtung steuerbar ist, die die Fluiddurchflussmenge an Durchgangsöffnungen (22) innerhalb eines vorgegebenen Bereichs einstellt,
- der erste Verschluss (16) einen inneren Durchgang (21) aufweist, der die ersten Öffnungen (14) mit den Durchgangsöffnungen (22) und mit einer ersten Fläche (23) der Membran (17) verbindet, wobei der auf die erste Fläche (23) der Membran (17) wirkende Fluiddruck in Bezug auf den in die Patrone (10) eintretenden Druck durch die Reduktionswirkung des ersten Verschlusses (16) verringert wird,
- der Körper der Patrone zweite Öffnungen (25) aufweist, um das Fluiddrucksignal stromabwärts der Patrone (10) zu der zweiten Fläche (24) der Membran (17) zu übertragen,
- die Druckdifferenz zwischen der ersten (23) und der zweiten Fläche (24) der Membran (17) die Bewegung des ersten Verschlusses (16) bestimmt;
- dritte voreinstellbare Öffnungen (28) in dem Auslassabschnitt (13) zum Einstellen der Fluiddurchflussmenge am Auslass der Patrone (10) bereitgestellt sind,
**dadurch gekennzeichnet, dass** die ersten Öffnungen (14) entlang einer ringförmigen Wand (15) des Einlassabschnitts (11) angeordnet sind, die zweiten Öffnungen (25) entlang einer anderen ringförmigen Wand (15A) des Einlassabschnitts (11) erhalten werden, und die dritten voreinstellbaren Öffnungen (28) eine innere Ringmutter (36) umfassen, die mit einer Reihe von Kerben (28A) mit in einer ringförmigen Richtung progressiv größeren Abmessungen versehen ist, und eine Außenwand des Auslassabschnitts (13) mit einer Reihe von ringförmig aufeinanderfolgend angeordneten Fenstern (28B) mit gleichen Abmessungen versehen ist, die an den Kerben (28A) angeordnet sind, wobei die Drehbewegung der Ringmutter (36) in Bezug auf die Fenster (28B) die Veränderung des Auslassströmungsdurchgangsbereichs bestimmt.

2. Patrone nach Anspruch 1, wobei der zweite Verschluss (26) durch eine Steuerstange (32) angetrieben wird, die mit der Ringmutter (36) gekoppelt ist, um die Ringmutter (36) zu drehen und die Fluiddurchflussmenge einzustellen.

3. Patrone nach Anspruch 2, umfassend einen Einstellabschnitt (35), der den zweiten Verschluss (26) und die Steuerstange (32) aufnimmt.

4. Hydraulikventil, umfassend einen Hohlkörper (50) mit einem Einlass (51) und einem Auslass (52), der eine Patrone (10) nach einem der vorstehenden Ansprüche aufnimmt.

## Revendications

1. Cartouche monobloc de stabilisation de débit (10) pour des vannes hydrauliques comprenant un corps avec une section d'entrée de fluide (11), une section intermédiaire (12), et une section de sortie de fluide (13), dans laquelle :
- dans la section d'entrée (11), des premières ouvertures (14) sont obtenues pour l'entrée du fluide dans la cartouche (10),
- dans la section intermédiaire (12), il est prévu un premier obturateur (16) qui réduit l'écoulement de fluide provenant des premières ouvertures (14), qui est monté sur une membrane (17) et qui est ouvert de force par un ressort étalonné (18),
- dans la section de sortie (13), il est prévu un second obturateur (26) qui est apte à être commandé par un dispositif d'actionnement qui ajuste le débit de fluide à des ouvertures de passage (22) à l'intérieur d'une plage préréglée,
- le premier obturateur (16) a un passage intérieur (21) qui relie les premières ouvertures (14) aux ouvertures de passage (22) et à une première face (23) de la membrane (17), la pression de fluide agissant sur la première face (23) de la membrane (17) étant réduite par rapport à la pression à l'entrée de la cartouche (10) par l'action de réduction du premier obturateur (16),
- le corps de la cartouche a des deuxièmes ouvertures (25) pour transporter le signal de pression de fluide en aval de la cartouche (10) jusqu'à la seconde face (24) de la membrane (17),
- la différence de pression entre la première (23) et la seconde face (24) de la membrane (17) déterminant le mouvement du premier obturateur (16) ;
- des troisièmes ouvertures pré-ajustables (28) sont prévues dans la section de sortie (13) pour ajuster le débit de fluide à la sortie de la cartouche (10),
**caractérisée en ce que** les premières ouvertures (14) sont agencées le long d'une paroi annulaire (15) de la section d'entrée (11), les deuxièmes ouvertures (25) sont obtenues le long d'une autre paroi annulaire (15A) de la section d'entrée (11), et les troisièmes ouvertures pré-ajustables (28) comprennent un écrou à anneau intérieur (36) pourvu d'une série d'encoches (28A) de dimensions progressivement croissantes dans une direction annulaire et une paroi extérieure de la section de sortie (13) est pourvue d'une série de fenêtres (28B) agencées de manière annulaire en succession, de dimensions identiques, agencées au niveau des encoches (28A), le mouvement rotationnel de l'écrou à anneau (36) par rapport aux fenêtres (28B) déterminant la variation de l'aire de passage d'écoulement de sortie.

2. Cartouche selon la revendication 1, dans laquelle le second obturateur (26) est entraîné par une tige de commande (32) couplée à l'écrou à anneau (36) pour tourner l'écrou à anneau (36) et ajuster le débit de fluide.

3. Cartouche selon la revendication 2, comprenant une section d'ajustement (35) qui reçoit le second obturateur (26) et la tige de commande (32).

4. Vanne hydraulique comprenant un corps creux (50) avec une entrée (51) et une sortie (52) qui reçoit une cartouche (10) selon l'une quelconque des revendications précédentes.
